# EUROPÄISCHE PATENTANMELDUNG

(11) **EP 1 312 288 A1**
(43) Veröffentlichungstag der Anmeldung: **21.05.2003**
(21) Anmeldenummer: 02009559.2
(22) Anmeldetag: 26.04.2002
(51) Int. Cl.: A47F 10/00, A47F 11/06, H04N 7/18

(54) **Vorrichtung zur Präsentation von Kleidung, die von einer Person getragen wird**

(30) Priorität: 16.11.2001 DE 10156114
(71) Anmelder: Müller Klaus, 76756 Bellheim (DE)
(72) Erfinder: Müller Klaus, 76756 Bellheim (DE)
(74) Vertreter: Naumann, Ulrich, Dr.-Ing.

(57) **Zusammenfassung**

Die vorliegende Erfindung betrifft eine Vorrichtung zur Präsentation von Kleidung, die von einer Person (12) getragen wird, und ist zur Vereinfachung des Präsentationsvorgangs sowie zur Vermeidung einer seitenverkehrten Wiedergabe gekennzeichnet durch einen eine Präsentationsfläche (1) oder eine Präsentationsstrecke (16) umfassenden Präsentationsbereich, in dem sich die Person (12) befindet, mindestens eine Bildaufnahmeeinrichtung (2, 3) zur Bildaufnahme der Person (12), eine Bildspeichereinrichtung (13) zum Speichern einer aufgenommenen Bildfolge, eine Bildwiedergabeeinrichtung (4, 5) und gegebenenfalls eine Lichtquelle (6).

## Beschreibung

Die vorliegende Erfindung betrifft eine Vorrichtung zur Präsentation von Kleidung, die von einer Person getragen wird.

Vorrichtungen dieser Art sind seit langem bekannt und finde insbesondere in Kaufhäusern und Modegeschäften vielseitigen Einsatz. So sind nahezu in jeder Kleiderabteilung Spiegel vorgesehen, mit denen sich Personen bei der Anprobe von Kleidung betrachten können, sozusagen die gegebenenfalls zu kaufende Kleidung am eigenen Körper präsentieren.

Die aus dem Stand der Technik bekannten Vorrichtungen zum Präsentieren von Kleidung, die von einer Person getragen wird, sind in vielerlei Hinsicht problematisch. So ermöglicht ein Spiegel zunächst nur das Spiegelbild der Person mit der von ihr getragenen Kleidung in der Vorderansicht. Zur Seitenansicht oder zur Ansicht von hinten muss die Person sich entsprechend ausrichten und hierbei den Kopf soweit wie möglich drehen, was im allgemeinen nur eine unzureichende Ansicht - insbesondere von hinten - ermöglicht. Das Verdrehen des Kopfes der Person bewirkt allerdings auch, dass sich die Körperhaltung insgesamt verändern kann, so dass ein Kleidungsstück - beispielsweise ein Mantel - anders anliegt bzw. fällt, als in einer natürlichen Körperhaltung, in der der Kopf nicht verdreht ist.

Die Anordnung eines zweiten Spiegels, über den sich die Person das Spiegelbild des ersten Spiegels betrachtet ist zwar denkbar, ist allerdings ebenfalls mit Problemen verbunden, da in Abhängigkeit von der relativen Anordnung der beiden Spiegel die Person zunächst ausprobieren muss, an welcher Position und in welcher Ausrichtung die gewünschte Ansicht der Person auch tatsächlich in einem der beiden Spiegel betrachtbar ist. Schließlich ist bei Spiegeln ganz allgemein problematisch, dass das Spiegelbild seitenverkehrt ist, das also eine gedankliche Anpassung der Person an ihr Spiegelbild unabdingbar ist.

Der vorliegenden Erfindung liegt daher die Aufgabe zugrunde, eine Vorrichtung zur Präsentation von Kleidung, die von einer Person getragen wird, der gattungsbildenden Art derart anzugeben und weiterzubilden, dass einerseits der Vorgang der Präsentation vereinfacht und andererseits eine seitenverkehrte Wiedergabe vermieden wird.

Die erfindungsgemäße Vorrichtung der gattungsbildenden Art löst die voranstehende Aufgabe durch die Merkmale des Patentanspruchs 1. Danach ist eine solche Vorrichtung gekennzeichnet durch einen eine Präsentationsfläche oder eine Präsentationsstrecke umfassenden Präsentationsbereich, in dem sich die Person befindet, mindestens eine Bildaufnahmeeinrichtung zur Bildaufnahme der Person, eine Bildspeichereinrichtung zum Speichern einer aufgenommenen Bildfolge, eine Bildwiedergabeeinrichtung und gegebenenfalls eine Lichtquelle.

Erfindungsgemäß ist zunächst erkannt worden, dass der Vorgang der Präsentation zeitlich entkoppelt werden kann, wodurch sich die aus dem Stand der Technik bekannten Probleme vermeiden lassen. So wird in erfindungsgemäßer Weise keine Vorrichtung vorgeschlagen, die eine zur Präsentation gleichzeitig stattfindende Wiedergabe ermöglicht, sondern der Vorgang der Präsentation wird von deren Wiedergabe zeitlich entkoppelt. So ist in erfindungsgemäßer Weise vorgesehen, dass die Person sich auf einer Präsentationsfläche oder auf einer Präsentationsstrecke befindet und mit mindestens einer Bildaufnahmeeinrichtung aufgenommen wird. Die von der Person aufgenommene Bildfolge wird sodann auf einer Bildspeichereinrichtung gespeichert. Die aufgenommene Bildfolge kann zu einem späteren Zeitpunkt, gegebenenfalls auch schon während der Präsentation, von der Person und/oder von Dritten betrachtet werden, wobei bei einer gleichzeitigen Betrachtung die eingangs genannte Problematik - eine unnatürliche Körperhaltung aufgrund eines verdrehten Kopfes - nach wie vor vorliegt. Daher wird eine Wiedergabe der aufgenommenen Bildfolge nach der Präsentation bevorzugt.

Mit Hilfe der erfindungsgemäßen Vorrichtung wird daher eine Bildfolge der Präsentation der Kleidung, die von der Person getragen wird, mit einer Bildaufnahmeeinrichtung aufgenommen, wobei hierbei die Person sich im Präsentaionsbereich bewegen könnte. Im einfachsten Fall könnte der Präsentationsbereich durch eine Präsentationsfläche gebildet werden, die beispielsweise durch eine Markierung auf dem Boden optisch wahrnehmbar ist. Hierbei könnte auch eine Markierung vorgesehen sein, entlang der sich die Person bewegt, so dass nach Durchlaufen des vorgesehenen Wegs - der Präsentationsstrecke - eine Bildfolge der Person vorliegt, die alle Ansichten umfasst.

Gegebenenfalls weißt die erfindungsgemäße Vorrichtung eine Lichtquelle auf, nämlich dann, wenn an dem Aufstellort der erfindungsgemäßen Vorrichtung keine definierten bzw. hinreichenden Beleuchtsungsbedingungen vorliegen. Insbesondere dann ist mindestens eine Lichtquelle zum Beleuchten der Person unabdingbar.

Der Präsentationsbereich könnte auch einen Laufsteg umfassen, wie er beispielsweise bei Modeschauen verwendet wird. In einer bevorzugten Ausführungsform umfasst der Präsentationsbereich eine Kabine, ein Rohrgestell oder eine Abtrennung. Das Rohrgestell oder die Abtrennung dient hauptsächlich zur Definition bzw. Umrandung des Präsentationsbereichs. Eine Kabine könnte in den Fällen vorgesehen sein, in denen beispielsweise Unterwäsche anprobiert wird. In diesem Fall ist die Kabine zumindest bereichsweise nicht von außen einsehbar bzw. uneinsehbar.

Hinsichtlich einer konkreten Ausführungsform ist vorgesehen, dass dem Präsentationsbereich eine Einheit zur Aufnahme der Bildaufnahme-, Bildspeicherund Bildwiedergabeeinrichtung zugeordnet ist, die vorzugsweise in Form eines Schranks, Regals oder Gehäuses ausgebildet ist. Insoweit können in vorteilhafter Weise die Strom- und Datenkabel der erfindungsgemäßen Vorrichtung in der Einheit untergebracht werden, wodurch der optische Gesamteindruck verbessert werden kann.

In einer besonders bevorzugten Ausführungsform sind mehrere Bildaufnahmeeinrichtungen an unterschiedlichen Positionen und mit unterschiedlichen Aufnahmerichtungen vorgesehen. Hierdurch können von ein und derselben Person gleichzeitig mehrere Bildfolgen aus unterschiedlichen Perspektiven aufgenommen werden. So könnte jeweils eine Bildaufnahmeeinrichtung derart angeordnet sein, dass mit ihr die Frosch- bzw. Vogelperspektive aufnehmbar ist.

Neben der Möglichkeit, dass die Person sich selbst im Präsentationsbereich bewegt, könnte weiterhin vorgesehen sein, dass zur Aufnahme der Bildfolge zwischen der Bildaufnahmeeinrichtung und der Person eine Relativbewegung erzeugbar ist. So könnte beispielsweise die Relativbewegung von einer sich drehenden, dem Präsentationsbereich zugeordneten Scheibe erzeugt werden, wobei die Person sich auf der Scheibe befindet. Insoweit kann hierdurch eine Bildfolge der von Person getragenen Kleidung von allen Seiten aufgenommen werden. Alternativ oder zusätzlich hierzu könnte die Bildaufnahmeeinrichtung relativ zur Person bewegbar sein, beispielsweise von einer beweglich angeordneten, die Bildaufnahmeeinrichtung halternden Halterung. Auch hierdurch könnte eine Bildfolge der von der Person getragenen Kleidung von allen Seiten aufgenommen werden, wenn nämlich beispielsweise die Bildaufnahmeeinrichtung in der Horizontalebene auf einer Kreisbahn bewegt wird und hierbei die Aufnahmerichtung der Bildaufnahmeeinrichtung zur Person zeigt.

In Abhängigkeit an die räumliche Ausbildung des Präsentationsbereichs kann es erforderlich sein, dass die Aufnahmerichtung der Bildaufnahmeeinrichtung automatisch an die Position der Person anpassbar ist. Dies könnte vorzugsweise durch Schwenken und/oder Verfahren der Bildaufnahmeeinrichtung erzielt werden. Somit könnte verhindert werden, dass die sich im Präsentationsbereich bewegende Person aus dem von der Bildaufnahmeeinrichtung erfassten Bereich heraus bewegt und somit nicht mehr auf der aufgenommenen Bildfolge erscheint. Gleiches gilt für Bildaufnahmeeinrichtungen, die eine Zoom- und/oder eine Fokussierungseinrichtung umfassen. So könnte der Zoom der Bildaufnahmeeinrichtung automatisch an die Position der Person anpassbar sein. Auch die Fokussierungseinrichtung könnte automatisch die Person fokussieren. Dementsprechend wäre stets sichergestellt, dass einerseits die Abbildungsgröße und andererseits die Fokuseinstellung der Person stets optimal eingestellt ist.

In vorteilhafter Weise könnte die Bildaufnahmeeinrichtung einen definierten Bereich der Person automatisch einstellen und/oder fokussieren und/oder zoomen. So könnte beispielsweise bei der Anprobe von Sakkos hauptsächlich der obere Bereich der Person automatisch eingestellt, fokussiert und gezoomt werden.

Die Bildaufnahmeeinrichtung umfasst eine Video-, TV- oder Digital-Kamera. Insoweit können hier auf dem Markt befindliche Standardkomponenten eingesetzt werden. Die Bildaufnahmeeinrichtung gibt analoge oder digitale Bildinformationen bzw. Bildsignale an die Bildspeichereinrichtung aus. Die von der Person aufgenommene Bildfolge kann einzelne Bilder oder eine kontinuierliche Bildserie umfassen. So könnte vorgesehen sein, dass mit einer Digital-Kamera mehrere Einzelbilder der Präsentation aufgenommen und abgespeichert werden. Hierdurch würden bei der Wiedergabe der Bildfolge einzelne Standbilder vorliegen, die dann beispielsweise mit einem Schneider betrachtet und eventuelle, an der Kleidung durchzuführende Änderungen besprochen werden können. Die Aufnahme einer kontinuierlichen Bildserie bringt den Vorteil mit sich, das Kleidungsstück unmittelbar an der Person in Bewegung aufzunehmen und wiederzugeben, so dass beim Tragen der Kleidung ein realistischer Eindruck entsteht.

In einer bevorzugte Ausführungsform sind Mittel zur Bestimmung der Position der Person vorgesehen, so dass die Positionsinformationen einer Steuerung der Bildaufnahmeeinrichtung zugeführt werden können, wodurch das Schwenken, Verfahren, Zoomen und/oder Fokussieren der Bildaufnahmeeinrichtung optimale Abbildungseigenschaften ermöglicht. Die Mittel zur Bestimmung der Position der Person könnten beispielsweise Bewegungssensoren und/oder Positionsdedektorsysteme umfassen. Insbesondere letztere könnten die Position der Diebstahlsicherungsanhänger detektieren, die üblicherweise an Kleidungstücken befestigt sind.

Die Bildspeichereinrichtung umfasst einen Videorecorder oder einen Computer, wobei die Bildspeichereinrichtung die Bildfolge in analoger oder digitaler Form speichert. Insbesondere bei einer einen Computer aufweisenden Bildspeichereinrichtung ist es von Vorteil, wenn die Bildfolge in einem standardisierten Computerformat speicherbar ist. Hierbei werden folgende Formate bevorzugt: TIFF, JPEG, GIF, MPEG, MOV oder AVI.

Die Bildwiedergabeeinrichtung weist einen Fernseher oder einen Monitor auf, vorzugsweise einen Computermonitor. Weiterhin können Bedienelemente vorgesehen sein, mit denen die Bildfolge abgespielt, angehalten, vor- oder zurückgespult und/oder gelöscht werden kann.

In einer ganz besonders bevorzugten Ausführungsform gibt die erfindungsgemäße Vorrichtung einen die abgespeicherte Bildfolge aufweisenden Datenträger oder ein die abgespeicherte Bildfolge aufweisendes Speichermedium aus. Somit könnte sich beispielsweise die Person eine Computer-CD ausgeben lassen, auf der die Bildfolge ihrer Präsentation abgespeichert ist. Demgemäß würde die Bildspeichereinrichtung einen CD-ROM-Brenner umfassen. Hierdurch kann beispielsweise die Person die Bildfolge auf ihrem Computer zu Hause abspielen, um nämlich die Präsentation mit ihrem Ehepartner zu betrachten. Demgemäß muss in ganz besonders vorteilhafter Weise ein Ehemann - also ein Dritter - seine Ehefrau nicht mehr bei ihrem Einkaufsbummel begleiten und dennoch könnten beide gemeinsam eine Kaufentscheidung fällen. Alternativ oder zusätzlich zur Ausgabe eines Datenträgers ist vorgesehen, dass die Bildfolge über das Internet der Person und/oder einem Dritten übermittelbar ist. Diese Übermittlung könnte beispielsweise über einen Direktzugriff auf die an das Internet angeschlossene Bildspeichereinrichtung oder per E-Mail erfolgen. Auch auf diesem Übermittlungsweg kann in besonders vorteilhafter Weise der Ehepartner die Präsentation zu Hause betrachten und zusammen mit der Person die Kaufentscheidung herbeiführen. Zur Übermittlung der Bildfolge über das Internet sind Sicherheitsvorkehrungen vorgesehen, so dass nur die Person oder nur berechtigte Dritte Zugriff auf die Bilddaten bzw. die Bildfolge haben. In diesem Zusammenhang könnte nach der Übermittlung der Bildfolge zur Person oder zum Dritten automatisch das Löschen der Bildfolge auf der Bildspeichereinrichtung vorgesehen sein.

Zum Bereitstellen einer definierten Beleuchtung des Präsentationsbereichs ist vorgesehen, dass mindestens eine Lichtquelle während der Aufnahme der Bildfolge aktiviert ist, wobei die Lichtquelle der Vorrichtung zugeordnet ist. Insbesondere nach Ablauf der vorgesehenen und definierten Aufnahmezeit könnte die Lichtquelle deaktiviert werden, so dass hierdurch ein für die Person ersichtliches Ende der Aufnahme signalisiert wird. Die der Vorrichtung zugeordneten Lichtquellen könnten die Person von oben, unten und/oder von der Seite beleuchten. Auch eine indirekte Beleuchtung wäre denkbar. Die Lichtquelle bzw. die Lichtquellen könnten in der Präsentationsfläche oder in dem Präsentationssteg und/oder in der Kabine und/oder an dem Rohrgestell und/oder an der Abtrennung vorgesehen sein.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen
- Fig. 1: eine schematische Darstellung eines ersten Ausführungsbeispiels der erfindungsgemäßen Vorrichtung zur Präsentation von Kleidung, die von einer Person getragen wird, und
- Fig. 2: eine schematische Darstellung eines zweiten Ausführungsbeispiels der erfindungsgemäßen Vorrichtung zur Präsentation von Kleidung, die von einer Person getragen wird.

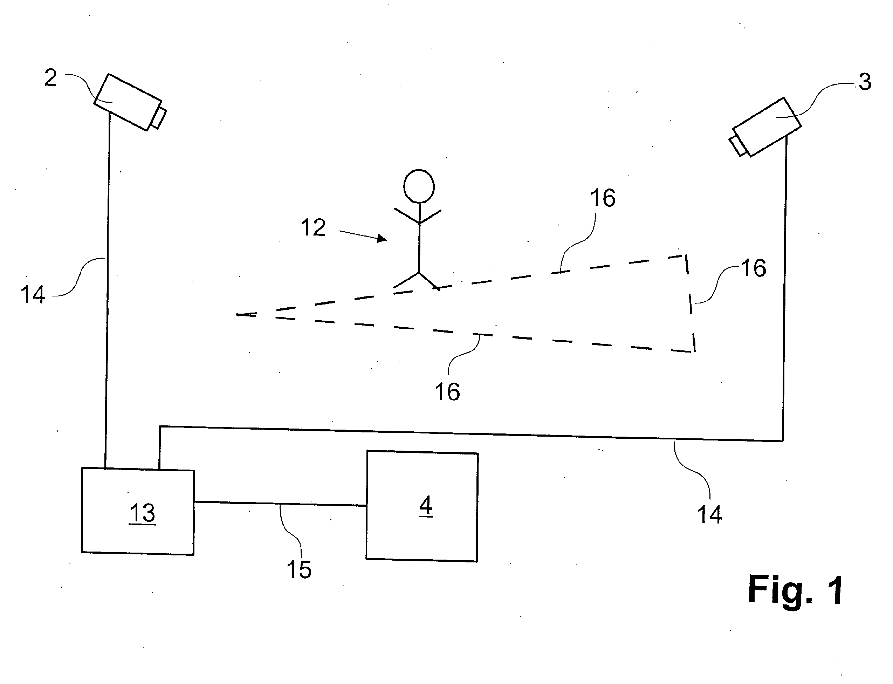

Die erfindungsgemäße Vorrichtung gemäß Fig. 1 ist gekennzeichnet durch einen eine Präsentationsstrecke 16 umfassenden Präsentationsbereich, entlang derer sich die Person 12 bewegt. Die Präsentationsstrecke 16 ist als "Parcours" bzw. Laufstrecke ausgebildet, den die Person während der Bildaufnahme durchläuft. Weiterhin umfasst die erfindungsgemäße Vorrichtung zwei zur Bildaufnahme der Person 12 im Präsentationsbereich dienende Bildaufnahmeeinrichtungen 2, 3 sowie eine Bildspeichereinrichtung 13 und eine Bildwiedergabeeinrichtung 4.

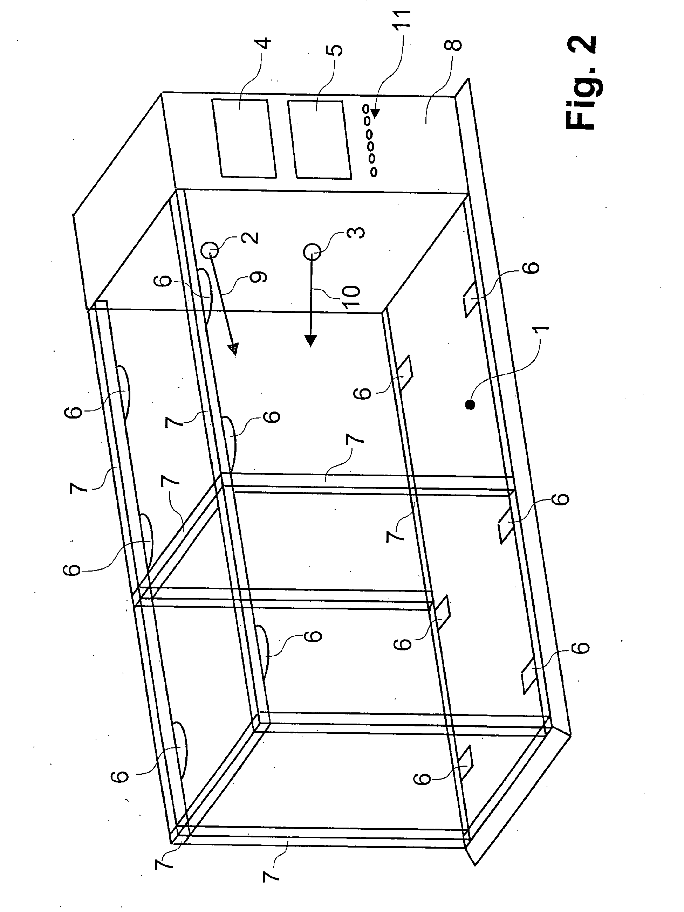

Die erfindungsgemäße Vorrichtung gemäß Fig. 2 weist darüber hinaus eine weitere Bildwiedergabeeinrichtung 5, mehrere Lichtquellen 6 sowie ein Rohrgestell 7 auf. Die Präsentationsfläche 1 aus Fig. 2 weißt eine Länge von vier Metern und eine Breite von 1, 5 Metern auf und ist als Laufsteg ausgebildet. An dem Rohrgestell 7 sind sechs Lichtquellen 6 befestigt. Dem Präsentationsbereich bzw. der Vorrichtung zur Präsentation ist eine Einheit 8 zur Aufnahme der Bildaufnahmeeinrichtung 2, 3, der in Fig. 2 nicht gezeigten Bildspeichereinrichtung sowie den Bildwiedergabeeinrichtungen 4, 5 zugeordnet. Die Einheit 8 ist in Form eines Schranks aufgeführt.

Die Bildaufnahmeeinrichtungen 2, 3 sind an unterschiedlichen Positionen und mit unterschiedlichen Aufnahmerichtungen vorgesehen, die mit Pfeilen der Bezugszeichen 9 und 10 angedeutet sind.

Eine sich entlang der Präsentationsstrecke 16 aus Fig. 1 oder auf der Präsentationsfläche 1 aus Fig. 2 bewegende Person wird von der Bildaufnahmeeinrichtung 2, 3 aufgenommen, die hierbei automatisch deren Zoom- und Fokuseinstellung an die Position der Person 12 anpasst. Aufgrund der länglich ausgebildeten Präsentationsfläche 1 aus Fig. 2 ist eine Schwenken bzw. Verfahren der Bildaufnahemeeinrichtungen 2, 3 nicht erforderlich. Die Bildaufnahmeeinrichtung 2, 3 weist eine Video-Kamera auf, die analoge Bildinformationen an die Bildspeichereinrichtung 13 ausgibt. Die aufzunehmende Bildfolge umfasst eine kontinuierliche Bildserie. Die Bildwiedergabeeinrichtungen 4 und 5 weisen zwei Fernsehbildschirme auf. Weiterhin sind Bedienelemente 11 zum Abspielen, Anhalten, Vor-, Zurückspulen und zum Löschen der Bildfolge vorgesehen.

Die Lichtquellen 6 sind nur während der Aufnahme der Bildfolge aktiviert. Durch die an dem Rohrgestell angebauten Lichtquellen 6 wird die Person auf der Präsentationsfläche 1 aus Fig. 2 von ober beleuchtet. Durch die in der Präsentationsfläche 1 eingebauten Lichtquellen 6 wird die Person von unten beleuchtet. In Fig. 1 ist gezeigt, dass die Bildaufnahmeeinrichtungen 2 und 3 über die Leitungen 14 mit der Bildspeichereinrichtung 13 verbunden sind. Die Bildspeichereinrichtung 13 ist über die Leitung 15 mit der Bildwiedergabeeinrichtung 4 verbunden.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Vorrichtung zur Präsentation von Kleidung, die von einer Person (12) getragen wird,
**gekennzeichnet durch** einen eine Präsentationsfläche (1) oder eine Präsentationsstrecke (16) umfassenden Präsentationsbereich, in dem sich die Person (12) befindet, mindestens eine Bildaufnahmeeinrichtung (2, 3) zur Bildaufnahme der Person (12), eine Bildspeichereinrichtung (13) zum Speichern einer aufgenommenen Bildfolge, eine Bildwiedergabeeinrichtung (4, 5) und gegebenenfalls eine Lichtquelle (6).

2. Vorrichtung nach Anspruch 1, **dadurch gekennzeichnet, dass** der Präsentationsbereich einen Laufsteg umfasst.

3. Vorrichtung nach Anspruch 1 oder 2, **dadurch gekennzeichnet, dass** der Präsentationsbereich eine Kabine, ein Rohrgestell (7) oder eine Abtrennung aufweist.

4. Vorrichtung nach Anspruch 3, **dadurch gekennzeichnet, dass** die Kabine zumindest bereichsweise uneinsehbar ist.

5. Vorrichtung nach einem der Ansprüche 1 bis 4, **gekennzeichnet durch** eine dem Präsentationsbereich zugeordneten Einheit (8) zur Aufnahme der Bildaufnahme- (2, 3), Bildspeicher- (13) und Bildwiedergabeeinrichtung (4 ,5), vorzugsweise in Form eines Gehäuses oder Schranks.

6. Vorrichtung nach einem der Ansprüche 1 bis 5, **dadurch gekennzeichnet, dass** mehrere Bildaufnahmeeinrichtungen (2, 3) an unterschiedlichen Positionen und mit unterschiedlichen Aufnahmerichtungen (9 ,10) vorgesehen sind.

7. Vorrichtung nach einem der Ansprüche 1 bis 6, **dadurch gekennzeichnet, dass** zur Aufnahme der Bildfolge zwischen der Bildaufnahmeeinrichtung (2, 3) und der Person (12) eine Relativbewegung erzeugbar ist.

8. Vorrichtung nach Anspruch 7, **dadurch gekennzeichnet, dass** die Relativbewegung von einer sich drehenden, dem Präsentationsbereich zugeordneten Scheibe erzeugbar ist, auf der sich die Person (12) befindet.

9. Vorrichtung nach Anspruch 7 oder 8, **dadurch gekennzeichnet, dass** die Bildaufnahmeeinrichtung (2, 3) relativ zur Person (12) bewegbar ist, vorzugsweise von einer beweglich angeordneten, die Bildaufnahmeeinrichtung (2, 3) halternden Halterung.

10. Vorrichtung nach einem der Ansprüche 1 bis 9, **dadurch gekennzeichnet, dass** die Aufnahmerichtung der Bildaufnahmeeinrichtung (2, 3) automatisch an die Position der Person (12) anpassbar ist, vorzugsweise durch Schwenken und/oder Verfahren der Bildaufnahmeeinrichtung (2, 3).

11. Vorrichtung nach einem der Ansprüche 1 bis 10, **dadurch gekennzeichnet, dass** die Bildaufnahmeeinrichtung (2, 3) mit einem Zoom ausgestattet ist und der Zoom automatisch an die Position der Person (12) anpassbar ist.

12. Vorrichtung nach einem der Ansprüche 1 bis 11, **dadurch gekennzeichnet, dass** die Bildaufnahmeeinrichtung (2, 3) eine Fokussierungseinrichtung aufweist, die die Person (12) automatisch fokussiert.

13. Vorrichtung nach einem der Ansprüche 9 bis 12, **dadurch gekennzeichnet, dass** die Bildaufnahmeeinrichtung (2, 3) einen definierbaren Bereich der Person (12) automatisch einstellt und/oder fokussiert und/oder zoomt.

14. Vorrichtung nach einem der Ansprüche 1 bis 13, **dadurch gekennzeichnet, dass** die Bildaufnahmeeinrichtung (2, 3) eine Video-, TV- oder Digitalkamera aufweist, die analoge oder digitale Bildinformationen an die Bildspeichereinrichtung (13) ausgibt.

15. Vorrichtung nach einem der Ansprüche 1 bis 14, **dadurch gekennzeichnet, dass** das die Bildfolge einzelne Bilder oder eine kontinuierliche Bildserie umfasst.

16. Vorrichtung nach einem der Ansprüche 1 bis 15, **dadurch gekennzeichnet, dass** Mittel zur Bestimmung der Position der Person (12) vorgesehen sind.

17. Vorrichtung nach Anspruch 16, **dadurch gekennzeichnet, dass** die Mittel zur Bestimmung der Position der Person (12) Bewegungssensoren und/oder Positionsdetektorsysteme umfassen.

18. Vorrichtung nach einem der Ansprüche 1 bis 17, **dadurch gekennzeichnet, dass** die Bildspeichereinrichtung (13) einen Videorecorder oder einen Computer umfasst.

19. Vorrichtung nach einem der Ansprüche 1 bis 18, **dadurch gekennzeichnet, dass** die Bildspeichereinrichtung (13) die Bildfolge in analoger oder in digitaler Form speichert.

20. Vorrichtung nach Anspruch 18 oder 19, **dadurch gekennzeichnet, dass** die Bildfolge in einem standardisierten Computerformat speicherbar ist, vorzugsweise im TIFF-, JPEG-, GIF-, MPEG-, MOV- oder AVI-Format.

21. Vorrichtung nach einem der Ansprüche 1 bis 20, **dadurch gekennzeichnet, dass** die Bildwiedergabeeinrichtung (4, 5) einen Fernseher oder einen Monitor, vorzugsweise einen Computermonitor, umfasst.

22. Vorrichtung nach einem der Ansprüche 1 bis 21, **gekennzeichnet durch** Bedienelemente (11) zum Abspielen, Anhalten, Vor-, Zurückspulen und/oder Löschen der Bildfolge.

23. Vorrichtung nach einem der Ansprüche 1 bis 22, **gekennzeichnet durch** die Ausgabe eines die abgespeicherte Bildfolge aufweisenden Datenträgers oder Speichermediums.

24. Vorrichtung nach einem der Ansprüche 1 bis 23, **dadurch gekennzeichnet, dass** die Bildfolge über das Internet der Person (12) und/oder einem Dritten übermittelbar ist.

25. Vorrichtung nach Anspruch 24, **dadurch gekennzeichnet, dass** die Bildfolge per E-Mail der Person (12) und/oder einem Dritten übermittelbar ist.

26. Vorrichtung nach Anspruch 24 oder 25, **dadurch gekennzeichnet, dass** nach der Übermittlung der Bildfolge zur Person oder zum Dritten automatisch das Löschen der Bildfolge auf der Bildspeichereinrichtung (13) vorgesehen ist.

27. Vorrichtung nach einem der Ansprüche 1 bis 26, **dadurch gekennzeichnet, dass** die der Vorrichtung zugeordnete Lichtquelle (6) während der Aufnahme der Bildfolge aktiviert ist.

28. Vorrichtung nach einem der Ansprüche 1 bis 27, **dadurch gekennzeichnet, dass** die der Vorrichtung zugeordneten Lichtquellen (6) die Person (12) von oben und/oder unten und/oder von der Seite beleuchten.

29. Vorrichtung nach Anspruch 28, **dadurch gekennzeichnet, dass** mindestens eine Lichtquelle (6) in der Präsentationsfläche (1) oder in dem Präsentationssteg und/oder in der Kabine und/oder an dem Rohrgestell (7) und/oder an der Abtrennung vorgesehen ist.
